Europäisches Patentamt

European Patent Office

Office européen des brevets

(11) Publication number: **0 029 601**
**B1**

## EUROPEAN PATENT SPECIFICATION

(45) Date of publication of patent specification: **18.09.85**

(51) Int. Cl.⁴: **G 02 B 6/38**

(21) Application number: **80107286.9**

(22) Date of filing: **21.11.80**

(54) Optical fiber cable termination assembly.

(30) Priority: **21.11.79 JP 151174/79**

(43) Date of publication of application:
**03.06.81 Bulletin 81/22**

(45) Publication of the grant of the patent:
**18.09.85 Bulletin 85/38**

(84) Designated Contracting States:
**DE FR GB NL**

(56) References cited:
**US-A-4 166 672**

**INSTRUMENTS AND EXPERIMENTAL
TECHNIQUES, vol. 22, no. 4, part 2, July-
August 1979, pages 1184-1185, New York,
U.S.A., I.A. GAVRILOV et al.: "Snap connector
for a monofiber optical cable"**

**E.D.N. ELECTRICAL DESIGN NEWS, vol. 23, no.
21, November 1978, pages 67-68, Denver,
U.S.A., "Plastic plug and modified connector
could ease fiber-optics termination"**

**REVIEW OF THE ELECTRICAL
COMMUNICATION, vol. 26, no. 5-6, May-June
(1978), pp. 693-700**

(73) Proprietor: **NEC CORPORATION
33-1, Shiba 5-chome, Minato-ku
Tokyo 108 (JP)**

(72) Inventor: **Morimoto, Yoshitaka
c/o Nippon Electric Co., Ltd. 33-1, Shiba
Gochome
Minato-ku, Tokyo (JP)**
Inventor: **Shiga, Tomiji
c/o Nippon Electric Co., Ltd. 33-1, Shiba
Gochome
Minato-ku, Tokyo (JP)**
Inventor: **Ushirogawa, Akio
c/o Nippon Electric Co., Ltd. 33-1, Shiba
Gochome
Minato-ku, Tokyo (JP)**

(74) Representative: **Vossius Vossius Tauchner
Heunemann Rauh
Siebertstrasse 4 P.O. Box 86 07 67
D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to an optical fiber cable termination assembly and, more particularly, to an optical fiber cable connector for terminating an optical fiber included in a cable to be movable in the axial direction of the cable.

Recent research and development of optical fiber communication systems have been made for their practical use with the improvements of optical fiber connectors for optical coupling between two optical fibers or between the optical fibre and another device (such as a laser).

One example of such connector is disclosed in U.S. Patent No. 4,166,672. This connector mutually connects two cables, each of which has an optical fiber composed of a core layer and a clad layer, and a tube for protecting the fiber from any external forces. More specifically, two types of cable are known hitherto as follows: One is so constructed to firmly support the optical fiber by the tube, while the other is so constructed as to allow movement of the optical fiber along the center axis of the tube. The optical fiber cable of the latter type is referred to as a loose tube type cable, whereas the optical fiber cable of the first type is referred to as a tight jacket type cable.

Conventionally, the assembly of an optical cable using the cable of the first type was made comparatively easily since the optical fiber is fixedly retained inside of the tube. In "Review of the Electrical Communication", Vol 26, Nos. 5—6, May—June 1978, pp. 693—700, an optical fiber cable termination for a tight jacket type cable is disclosed, in which a glass pipe fixed to the fiber protrudes from the end of the fiber cable which fits, with the glass pipe, within a stainless steel pipe. The glass pipe is used for centering the fiber core within the stainless steel pipe in order to prevent an inclination of the fiber and for increasing the contact area between the fiber and an epoxy resin filled within the stainless steel pipe while minimizing the amount of epoxy resin. The glass pipe therefore requires a small, relatively long through-hole.

On the other hand, in the cable of the latter type (i.e. loose tube type), the assembly becomes complicated due to the use of such a movable fiber, degrading work efficiency.

An object of the present invention is, therefore, to provide an optical fiber cable termination assembly for an optical fiber cable of the type which loosely holds an optical fiber within the tube thereof, designed for enabling easy assembly work.

This object is achieved by an optical fiber cable termination assembly according to the claims.

The present invention will be described in greater detail by referring to the accompanying drawings, wherein:

Fig. 1 is a cross sectional view of one embodiment of the present invention; and

Fig. 2 is a diagram showing one application of the present invention.

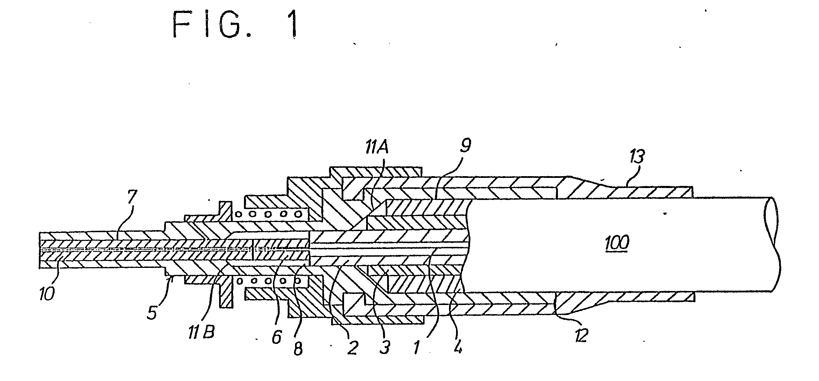

Referring to Fig. 1, a cable 100 for use in the present invention comprises an optical fiber 1 having a core layer and a clad layer; a first tube 2 made of nylon and having an internal diameter sufficient to allow the free movement of the fiber 1 in the axial direction thereof; a member 3 made of organic synthetic fiber (such as aromatic polyamide fiber) and formed coaxially around the outer circumference of the tube 2 to give a certain tension; and an outer sheath 4 made of vinyl chloride formed concentrically around the outer circumference of the member 3. The tube 2, the member 3, and the sheath 4 are formed stepwise so as to allow a large contact area with a bore 9 with a termination member 5, as mentioned later in greater detail. A securing tubular member 6 made of glass is attached at the end of the cable 100 by the use of an epoxy adhesivity agent (not shown) to prevent the fibre 1 from moving in the tube 2. The member 6 has an inner diameter substantially, preferably exactly the same as that of the optical fiber 1. The member 6 may be made of other metallic or non-metallic materials which have the adhesivity property. The termination member 5 made of stainless steel has a first bore 7 for supporting the fiber 1, a second bore 8 for retaining the member 6 and the end of the tube 2, and a third bore 9 for receiving the tube 2, the member 3 and the outer sheath 4. The bores 7 and 8 are continuously formed as shown in Fig. 1. The first bore 7 receives a glass tube 10 which has an inner diameter substantially the same as the fiber 1 so as to tightly secure the fiber 1. (Accordingly, though the diameter of the optical fiber 1 fills the almost entire inner space of the glass tube 10 and tubular member 6 and loosely extends into the protective tube 2, the optical fiber is drawn with a single line for simplification of drawing.) A surface 11A of the bore 9 is tapered to enable the outer sheath 4 of the cable 100 to contact surface 11A first. This is because the fiber 1 may be broken when the tube 6 contacts the surface 11B before the outer sheath 4 contacts the surface 11A. A rubber member 13 is provided around the outer circumference of the termination member 5 to soften the force given, by the end 12 of the member 5, to the cable 100 due to the cable bending.

An assembling of the present connector is now described in detail. The member 6 is fixed, by the use of an adhesivity agent (such as mythyl 2-cyanocrylate) for instantaneous bonding, to the fiber 1 in the cable 100. The cable 100 having the above mentioned stepped structure and with the member 6 fixed is attached to the termination member 5 by the epoxy adhesivity agent. Finally, the glass tube 10 for tightly supporting the fiber 1 to the first bore 7 is inserted into the member 5.

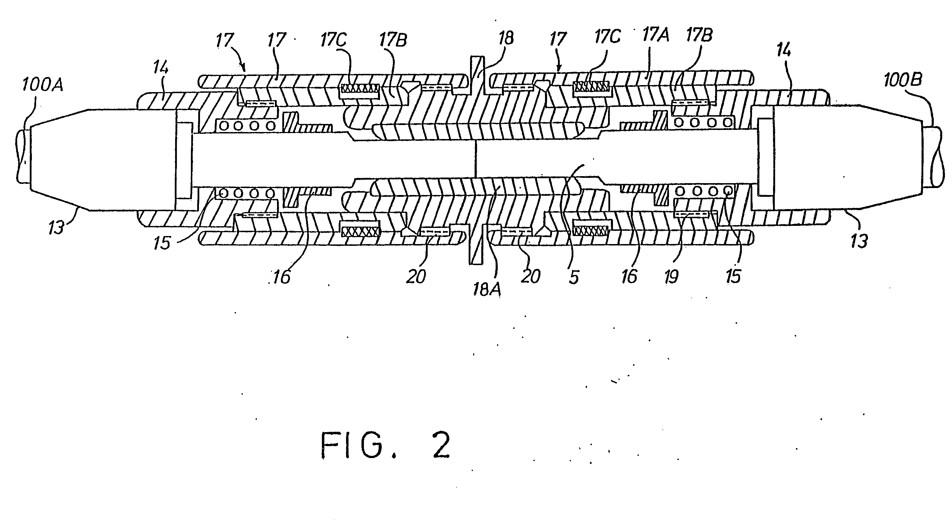

Referring to Fig. 2, a housing 14 is placed over the rubber member 13. Spring coils 15 are disposed between the housing 14 and the termination member 5. Stoppers 16 are attached to prevent the coils 15 from jumping out of the housing 14. A housing 17 is made up of an external member 17A, an internal member 17B, and a ring 17C, so that the member 17A may be freely rotated around the outer circumference of the member 17B. The housing 17 is fixed to the housing 14 by means of a screw 19. An adapter 18 having a sleeve 18A to guide the termination member 5 is attached to the housing 17 by a screw 20.

The operation for coupling two optical fiber cables 100A and 100B using the present connector of Fig. 1 is described hereunder.

(1) The housing 14 is placed over the rubber member 13.

(2) After the springs 15 are attached, the stoppers 16 are attached to the member 5.

(3) The housing 17 is attached to the housing 14.

The above steps (1) to (3) are performed for each of the cables 100A and 100B, and the adapter 18 is attached to the housing 17 of the first cable 100A, and the adapter 18 is then attached to the second cable 100B, thus completing the interconnection of the cables 100A and 100B.

As mentioned above, when applied in attaching the optical cables to the termination member, the present invention makes work efficiency easier, since the glass tube prevents the movement of the optical fiber along the center axis.

## Claims·

1. An optical fiber cable termination assembly for an optical fiber cable (100) of the type comprising an optical fiber (1) and a protective tube (2) for containing said optical fiber (1) to move freely and axially therein, a forward part of said optical fiber (1) protruding from said protective tube (2), said termination assembly comprising:

a) a securing tubular member (6) abutting against the end of said protective tube (2) and fixed to the protruding part of said optical fiber (1) inserted therethrough to prevent an axial movement of said optical fiber (1) inside said protective tube (2), the inner diameter of the securing tubular member (6) being dimensioned to be substantially equal to the diameter of said optical fiber (1),

b) a termination member (5) having a cylindrical bore (7, 8, 9) extending therethrough from one end to the other and receiving said optical fiber cable (100) with the optical fiber (1) fixed to said securing tubular member (6) and protruding up to the end of the termination member (5) opposite to that end receiving the cable (100), and

c) a glass tube (10) abutting against the securing tubular member (6) and inserted into the termination member (5) for tightly securing the remainder of said protruding part of said optical fiber (1) inserted therethrough.

2. An assembly as claimed in claim 1, characterized in that said cylindrical bore comprises a first bore (7) for receiving said glass tube (10), a second bore (8) for receiving said securing tubular member (6) and the end of said protective tube (2), and a third bore (9) for receiving said optical fiber cable end (4).

3. An·assembly as claimed in claims 1 and 2, further comprising absorbing means (17) formed coaxially around said termination member (5) for absorbing the external force in the axial direction of said optical fiber (1) and means (18) connected to said absorbing means· (17) for coupling said assembly to another assembly having the same structure.

## Revendications

1. Terminaison pour câble de fibres optiques pour un câble de fibres optiques (100) du type comprenant une fibre optique (1) et un tube de protection (2) pour renfermer la fibre optique (1) tout en permettant à la fibre optique (1) de se déplacer librement et axialement en son intérieur, une partie avant de la fibre optique (1) étant en saillie sur le tube de protection (2), la terminaison comprenant:

a) un élément tubulaire de securité (6) en aboutement contre l'extrémité du tube de protection (2) et fixé à la partie en saillie de la fibre optique (1) insérée dedans afin d'éviter un déplacement axial de la fibre optique (1) à l'intérieur du tube de protection (2); le diamètre intérieur de l'élément tubulaire de securité (6) étant dimensionné de manière à être sensiblement ègal au diamétre de la fibre optique (1);

b) un élément de terminaison (5) ayant un alésage cylindrique (7, 8, 9) s'étendant à travers lui entre une extrémité et l'autre et recevant le câble de fibres optiques (100) avec la fibre optique (1) fixée à l'élément tubulaire de securité (6) et étant en saillie jusqu'à l'extrémité de l'élément de terminaison (5) opposée à l'extrémité recevant le câble (100); et

c) un tube en verre (10) en aboutement contre l'élément tubulaire de securité (6) et inséré dans l'élément de terminaison (5) pour une fixation étanche du reste de la partie en saillie de la fibre optique (1) insérée dedans.

2. Terminaison selon la revendication 1, caractérisée en ce que l'alésage cylindrique comprend un premier alésage (7) destiné à recevoir le tube en verre (10), un second alésage (8) destiné à recevoir l'élément tubulaire de securité (6) et l'extrémité du tube de protection (2), et un troisième alésage (9) destiné à recevoir l'extrémité (4) du câble fibres optiques.

3. Terminaison seon la revendication 1 ou 1a revendication 2 comprenant en outre un moyen absorbant (17) formé coaxialement autour de l'élément de terminaison (5) pour absorber la force extérieure dans la direction axiale de la fibre optique (1) et un moyen (18) connecté au moyen absorbant (17) pour accoupler la terminaison à une autre terminaison ayant la même structure.

## Patentansprüche

1. Lichtleitfaserkabel-Endstück für ein Lichtleitfaserkabel (100) mit einer Lichtleitfaser (1) und einem Schutzrohr (2), das die Lichtleitfaser (1) aufnimmt, während diese frei und in Axialrichtung darin beweglich ist, wobei ein Vorderteil der Lichtleitfaser (1) aus dem Schutzrohr (2) vorragt, gekennzeichnet durch:

a) ein rohrförmiges Sicherungsteil (6), das gegen das Ende des Schutzrohres (2) stößt und am vorragenden Teil der hierdurch geführten Lichtleitfaser (1) befestigt ist, um eine Axialbewegung der Lichtleitfaser (1) innerhalb des Schutzrohres (2) zu verhindern, wobei der Innendurchmesser des rohrförmigen Sicherungsteiles (6) im wesentlichen gleich dem Durchmesser der Lichtleitfaser (1) ist,

b) ein Endelement (5) mit einer zylindrischen Bohrung (7, 8, 9) die sich hierdurch von einem Ende zum anderen erstreckt und das Lichtleitfaserkabel (100) aufnimmt, wobei die Lichleitfaser (1) am rohrförmigen Sicherungsteil (6) befestigt ist und bis zu demjenigen Ende des Endelementes (5) vorragt, das dem das Kabel (100) aufnehmenden Ende gegenüberliegt, und

c) ein Glasrohr (10), das gegen das rohrförmige Sicherungsteil (6) stößt und in das Endelement (5) eingeführt ist, um des Rest des vorragenden Teils die hierdurch geführten Lichtleitfaser (1) fest zu sichern.

2. Endstück nach Anspruch 1, dadurch gekennzeichnet, daß die zylindische Bohrung eine erste Bohrung (7) zum Aufnehmen des Glasrohres (10), eine zweite Bohrung (8) zum Aufnehmen des rohrförmigen Sicherungsteiles (6) und des Endes des Schutzrohres (2) und eine dritte Bohrung (9) zum Aufnehmen des Endes (4) des Lichtleitfaserkabels aufweist.

3. Endstück nach Anspruch 1 oder 2, ferner gekennzeichnet durch eine koaxial um das Endelement (5) ausgebildete Absorbereinrichtung (17) zum Aufnehmen der äußeren Kraft in Axialrichtung der Lichtleitfaser (1) und eine mit der Absorbereinrichtung (17) verbundene Einrichtung (18) zum Verbinden des Endstückes mit einem weiteren Endstück mit der gleichen Struktur.

FIG. 1

0 029 601

FIG. 2